# EUROPEAN PATENT SPECIFICATION

(11) **EP 4 147 485 B1**
(45) Date of publication and mention of the grant of the patent: **09.12.2026**
(21) Application number: 20934563.6
(22) Date of filing: 08.05.2020
(51) Int. Cl.: H04W 48/20, H04W 4/40, H04W 24/08, H04W 48/12

(54) **VEHICLE-TO-EVERYTHING CELL RESELECTION**
FAHRZEUG-ZU-ALLEM-ZELLENNEUAUSWAHL
RESÉLECTION DE CELLULE DE TYPE VÉHICULE À TOUT

(43) Date of publication of application: 15.03.2023
(73) Proprietor: QUALCOMM Incorporated, San Diego, CA 92121-1714 (US)
(72) Inventor: LI, Chunxia, San Diego, California 92121-1714 (US); SUN, Wei, San Diego, California 92121-1714 (US); CHEN, Feng, San Diego, California 92121-1714 (US)
(74) Representative: Bardehle Pagenberg Partnerschaft mbB Patentanwälte Rechtsanwälte
(86) International application number: PCT/CN2020/089133
(87) International publication number: WO 2021/223204

(56) References cited:
- CN-A- 110 958 652
- US-A1- 2019 090 107
- US-B2- 9 655 022
- HUAWEI ET AL: "TP to TR 38.885 on NR SL design, CP aspects", vol. RAN WG2, no. Spokane, USA; 20181112 - 20181116, 17 November 2018 (2018-11-17), XP051495006, Retrieved from the Internet <URL:http://www.3gpp.org/ftp/tsg%5Fran/WG2%5FRL2/TSGR2%5F104/Docs/R2%2D1818739%2Ezip> [retrieved on 20181117]
- "Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 17 June 2017 (2017-06-17), XP051306291, Retrieved from the Internet <URL:http://www.3gpp.org/ftp/tsg_ran/WG2_RL2/Specifications/201706_draft_specs_after_RAN_76/> [retrieved on 20170617]
- CATT: "Cell (Re-) selection Function in NR V2X Sidelink", vol. RAN WG2, no. Athens, GR; 20190225 - 20190301, 15 February 2019 (2019-02-15), XP051601587, Retrieved from the Internet <URL:http://www.3gpp.org/ftp/tsg%5Fran/WG2%5FRL2/TSGR2%5F105/Docs/R2%2D1900187%2Ezip> [retrieved on 20190215]
- "3rd Generation Partnership Project; Technical Specification Group Radio Access Network; Evolved Universal Terrestrial Radio Access (E-UTRA); User Equipment (UE) procedures in idle mode (Release 16)", vol. RAN WG2, no. V16.0.0, 8 April 2020 (2020-04-08), pages 1 - 58, XP051893876, Retrieved from the Internet <URL:ftp://ftp.3gpp.org/Specs/archive/36_series/36.304/36304-g00.zip 36304-g00.docx> [retrieved on 20200408]
- HUAWEI, HISILICON: "Cell reselection for V2X SL communication in NR", 3GPP DRAFT; R2-1907458 CELL RESELECTION FOR V2X SL COMMUNICATION IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France , XP051730894
- INTERDIGITAL INC.: "MultiRAT Aspects in NR V2X for IDLE/INACTIVE", 3GPP DRAFT; R2-1906388 (R16 V2X WI A1147 CP MULTIRAT ASPECTS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France , XP051729853
- INTERDIGITAL INC.: "Control Plane Aspects for Broadcast NR V2X", 3GPP DRAFT; R2-1816792 (R16 V2X SI A11422 CONTROL PLANE ASPECTS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Spokane, USA; 20181112 - 20181116, 12 November 2018 (2018-11-12), Mobile Competence Centre ; 650, route des Lucioles ; F-06921 Sophia-Antipolis Cedex ; France , XP051556357
- INTERDIGITAL INC.: "RAT selection for NR V2X", 3GPP DRAFT; R2-1814019 (R16 V2X SI A1144 RAT SELECTION FOR NR V2X), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chengdu, China; 20181008 - 20181012, 28 September 2018 (2018-09-28), Mobile Competence Centre ; 650, route des Lucioles ; F-06921 Sophia-Antipolis Cedex ; France , XP051523481

## Description

### FIELD OF TECHNOLOGY

The following relates generally to wireless communications and more specifically to vehicle-to-everything (V2X) cell reselection.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, a UE may measure parameters of a set of cells. In some cases, each of the set of cells may be associated with a respective priority, which may be indicated to the UE from a base station. The UE may use the measured parameters and the priority information when determining to perform cell reselection.

In some cases, the UE may be operating using a vehicle-to-everything (V2X) service. If the UE is using a V2X service, the UE may not know which cells of the set of cells support the V2X service. Further, the priority information received by the UE may not inform the UE of the cells which support the V2X service. Thus, if the UE performs a cell reselection procedure, the UE may select a cell which does not support the V2X service, which may cause the UE to perform additional cell reselection procedures until connection with a cell that supports the V2X service is established. Such cases may lead to disruptions in the V2X service at the UE, among other issues.

3GPP R2-1818739, "TP to TR 38.885 on NR SL design, CP aspects", was contributed by Huawei, HiSilicon to the 3GPP TSG RAN WG2 Meeting #104, Spokane, USA, November 12th - 16th 2018 and discloses RRC functionalities in Uu to support V2X communications is NR sidelink. US 9,655,022 B2 discloses a cell reselection method adapted to a communication device of a communication system includes receiving a first priority information and a Device to Device communication information broadcasted by a network node of the communication system; and rearranging the first priority information into a second priority information according to the D2D communication information when the communication device is in an operation scenario.
3GPP TS 36.300 v14.3.0 (2017-06) discloses in section 23.14 various aspects relating to support for V2X services. If the UE is configured with scheduled resource allocation in the handover command, the UE continues to use the exceptional transmission resource pool while the timer associated with handover is running.

### SUMMARY

The invention is defined by the independent claims.

The described techniques relate to improved methods, systems, devices, and apparatuses that support vehicle-to-everything (V2X) cell reselection. Generally, the described techniques enable a user equipment (UE) to determine priorities associated with cells that support a V2X service, which may include the UE receiving a priority indicator from the base station. The priority indicator may inform the UE of priorities associated with one or more cells that support the V2X service. In some examples, the priority indicator may be received in a radio resource control (RRC) connection release message. The UE may perform a cell reselection procedure based on the priority indicator, the measured parameters, or both. By informing the UE of priorities associated with cells that support the V2X service, the V2X service may have greater continuity at the UE when the UE performs cell reselection, thereby increasing the performance and quality of the V2X service.

A method of wireless communications at a UE is described. The method may include receiving, from a serving cell of the UE, control signaling that indicates a set of one or more cells that support V2X communications and priority information for a set of V2X frequencies supported by the set of one or more cells, measuring one or more parameters of a target cell of the set of one or more cells, and performing a cell reselection procedure to establish connectivity with the target cell using a first V2X frequency of the set of V2X frequencies based on the priority information and the measured one or more parameters.

An apparatus for wireless communications at a UE is described. The apparatus may include a processor, memory coupled with the processor, and instructions stored in the memory. The instructions may be executable by the processor to cause the apparatus to receive, from a serving cell of the UE, control signaling that indicates a set of one or more cells that support V2X communications and priority information for a set of V2X frequencies supported by the set of one or more cells, measure one or more parameters of a target cell of the set of one or more cells, and perform a cell reselection procedure to establish connectivity with the target cell using a first V2X frequency of the set of V2X frequencies based on the priority information and the measured one or more parameters.

Another apparatus for wireless communications at a UE is described. The apparatus may include means for receiving, from a serving cell of the UE, control signaling that indicates a set of one or more cells that support V2X communications and priority information for a set of V2X frequencies supported by the set of one or more cells, measuring one or more parameters of a target cell of the set of one or more cells, and performing a cell reselection procedure to establish connectivity with the target cell using a first V2X frequency of the set of V2X frequencies based on the priority information and the measured one or more parameters.

A non-transitory computer-readable medium storing code for wireless communications at a UE is described. The code may include instructions executable by a processor to receive, from a serving cell of the UE, control signaling that indicates a set of one or more cells that support V2X communications and priority information for a set of V2X frequencies supported by the set of one or more cells, measure one or more parameters of a target cell of the set of one or more cells, and perform a cell reselection procedure to establish connectivity with the target cell using a first V2X frequency of the set of V2X frequencies based on the priority information and the measured one or more parameters.

Some examples of the method, apparatuses, and non-transitory computer-readable medium described herein may further include operations, features, means, or instructions for receiving an indication of a duration for a cell reselection timer from the serving cell, initiating the cell reselection timer based on receiving the indication, and performing the cell reselection procedure with the target cell prior to expiration of the cell reselection timer.

In some examples of the method, apparatuses, and non-transitory computer-readable medium described herein, receiving the indication of the duration for the cell reselection timer may include operations, features, means, or instructions for receiving, from the serving cell, a connection release message that includes the indication of the duration for the cell reselection timer.

Some examples of the method, apparatuses, and non-transitory computer-readable medium described herein may further include operations, features, means, or instructions for determining that the measured one or more parameters of the target cell satisfy a measurement threshold, where the cell reselection procedure may be performed based on the measured one or more parameters satisfying the measurement threshold.

In some examples of the method, apparatuses, and non-transitory computer-readable medium described herein, measuring the one or more parameters of the target cell of the set of one or more cells may include operations, features, means, or instructions for measuring a reference signal received power (RSRP), a received signal strength indicator (RSSI), a received signal code power (RSCP), reference signal received quality (RSRQ), or any combination thereof associated with at least one cell of the set of one or more cells including the target cell.

In some examples of the method, apparatuses, and non-transitory computer-readable medium described herein, receiving the control signaling may include operations, features, means, or instructions for receiving a RRC connection release message including the set of one or more cells that support V2X communications and the priority information for the set of V2X frequencies supported by the set of one or more cells.

Some examples of the method, apparatuses, and non-transitory computer-readable medium described herein may further include operations, features, means, or instructions for receiving a system information message from the target cell based on receiving the control signaling, the system information message indicating a V2X configuration of the target cell, where the cell reselection procedure may be performed based on the V2X configuration.

In some examples of the method, apparatuses, and non-transitory computer-readable medium described herein, receiving the system information message may include operations, features, means, or instructions for receiving a SIB within the system information message.

In some examples of the method, apparatuses, and non-transitory computer-readable medium described herein, the set of one or more cells includes the serving cell and one or more neighboring cells.

In some examples of the method, apparatuses, and non-transitory computer-readable medium described herein, the serving cell and the target cell operate using different radio access technologies (RATs).

A method of wireless communications at a serving cell is described. The method may include determining a set of one or more cells that support V2X communications and priority information for a set of V2X frequencies supported by the set of one or more cells and transmitting, to a UE, control signaling that indicates the set of one or more cells that support V2X communications and the priority information for the set of V2X frequencies supported by the set of one or more cells.

An apparatus for wireless communications at a serving cell is described. The apparatus may include a processor, memory coupled with the processor, and instructions stored in the memory. The instructions may be executable by the processor to cause the apparatus to determine a set of one or more cells that support V2X communications and priority information for a set of V2X frequencies supported by the set of one or more cells and transmit, to a UE, control signaling that indicates the set of one or more cells that support V2X communications and the priority information for the set of V2X frequencies supported by the set of one or more cells.

Another apparatus for wireless communications at a serving cell is described. The apparatus may include means for determining a set of one or more cells that support V2X communications and priority information for a set of V2X frequencies supported by the set of one or more cells and transmitting, to a UE, control signaling that indicates the set of one or more cells that support V2X communications and the priority information for the set of V2X frequencies supported by the set of one or more cells.

A non-transitory computer-readable medium storing code for wireless communications at a serving cell is described. The code may include instructions executable by a processor to determine a set of one or more cells that support V2X communications and priority information for a set of V2X frequencies supported by the set of one or more cells and transmit, to a UE, control signaling that indicates the set of one or more cells that support V2X communications and the priority information for the set of V2X frequencies supported by the set of one or more cells.

Some examples of the method, apparatuses, and non-transitory computer-readable medium described herein may further include operations, features, means, or instructions for receiving, from a neighboring cell, a backhaul message indicating whether the neighboring cell supports V2X communications.

In some examples of the method, apparatuses, and non-transitory computer-readable medium described herein, transmitting the control signaling may include operations, features, means, or instructions for transmitting a RRC connection release message that indicates the set of one or more cells that support V2X communications and the priority information for the set of V2X frequencies supported by the set of one or more cells.

Some examples of the method, apparatuses, and non-transitory computer-readable medium described herein may further include operations, features, means, or instructions for receiving a connection request message from the UE, and transmitting, in response to the connection request message, an indication of a duration for a cell reselection timer to the UE.

In some examples of the method, apparatuses, and non-transitory computer-readable medium described herein, transmitting the indication of the duration for the cell reselection timer may include operations, features, means, or instructions for transmitting a connection release message that includes the indication of the duration for the cell reselection timer to the UE.

### BRIEF DESCRIPTION OF THE DRAWINGS

FIG. 1 illustrates an example of a wireless communications system that supports vehicle-to-everything (V2X) cell reselection in accordance with aspects of the present disclosure.
FIG. 2 illustrates an example of a wireless communications system that supports V2X cell reselection in accordance with aspects of the present disclosure.
FIG. 3 illustrates an example of a processing timeline that supports V2X cell reselection in accordance with aspects of the present disclosure.
FIG. 4 illustrates an example of a process flow that supports V2X cell reselection in accordance with aspects of the present disclosure.
FIGs. 5 and 6 show block diagrams of devices that support V2X cell reselection in accordance with aspects of the present disclosure.
FIG. 7 shows a block diagram of a communications manager that supports V2X cell reselection in accordance with aspects of the present disclosure.
FIG. 8 shows a diagram of a system including a device that supports V2X cell reselection in accordance with aspects of the present disclosure.
FIGs. 9 and 10 show block diagrams of devices that support V2X cell reselection in accordance with aspects of the present disclosure.
FIG. 11 shows a block diagram of a communications manager that supports V2X cell reselection in accordance with aspects of the present disclosure.
FIG. 12 shows a diagram of a system including a device that supports V2X cell reselection in accordance with aspects of the present disclosure.
FIGs. 13 through 18 show flowcharts illustrating methods that support V2X cell reselection in accordance with aspects of the present disclosure.

### DETAILED DESCRIPTION

In some wireless communications systems, a user equipment (UE) may measure parameters of cells, including a serving cell and one or more neighboring cells. In some cases, the measurements may include measuring reference signal received power (RSRP), received signal code power (RSCP), reference signal received quality (RSRQ) or any combination thereof associated with the cells. Additionally or alternatively, the UE may receive a priority indicator from a base station indicating one or more priorities associated with the set of cells. In some cases, the UE may determine to perform a cell reselection procedure based on the priority indicator, the measured parameters, or both.

If the UE performs a cell reselection procedure, the UE may select a cell based on the measured parameters. For example, the UE may select a cell with a higher measured RSRP instead of selecting a cell with a lower RSRP. Additionally or alternatively, the UE may select a cell based on the priorities associated with the cell. For example, the priority indicator may inform the UE of priorities associated with different radio access technologies (RATs) used by the set of cells. In some cases, the serving cell and the one or more neighboring cells may be operating using different RATs, such as New Radio (NR), Long Term Evolution (LTE), narrow-band internet-of-things (NB-IoT), among others. The priority indicator may inform the UE that one RAT may be given precedence over another. Accordingly, if the UE performs a cell reselection procedure, the UE may select a cell that is operating using a RAT with a high priority instead of selecting a cell that is operating using an RAT of a lower priority. Additionally or alternatively, the base station may transmit to the UE a duration of a timer associated with cell reselection. The UE may use the timer to determine a window during which the UE may perform cell reselection.

In some cases, the UE may be operating using a vehicle-to-everything (V2X) service. If the UE is using a V2X service, the UE may be unaware of which cells of the set of cells support the V2X service. Further, the priority indicator transmitted to the UE from the base station may include priorities for the serving cell and neighboring cells of the UE, but may not include information as to which of the cells support the V2X service. If the UE performs a cell reselection procedure, the UE may select a cell which does not support the V2X service. In such cases, the UE may perform additional cell reselection procedures in an attempt to establish connection with a cell that supports the V2X service. The additional cell reselection procedure(s) may lead to disruptions in the V2X service at the UE and introduce latency at the UE.

One method of informing the UE of priorities associated with cells that support the V2X service may include the UE receiving a priority indicator from the base station. The priority indicator may inform the UE of priorities associated with one or more cells that support the V2X service. In some cases, the priority indicator may be included in control signaling with the indication of RAT priorities. In some examples, the priority indicator may be received in a radio resource control (RRC) connection release message. The UE may use the priority indicator to determine which cells of the set of cells support the V2X service and a corresponding priority for the V2X frequencies supported by the cells. Accordingly, the UE may perform a cell reselection procedure based on the priority indicator for cells supporting the V2X service, the measured parameters, the RAT priorities, or any combination thereof.

Additionally or alternatively, one or more base stations associated with the neighbor cells may transmit, to the UE, system information indicating V2X service configurations. In some examples, the base stations may transmit system information in a system information block (SIB). Accordingly, the UE may perform a cell reselection procedure based on the V2X configurations of the neighbor cells. In some examples, the UE may consider the system information during the duration of the timer associated with cell reselection. In some cases, the UE may support V2X service continuity and may only be able to receive a V2X service while connected to a serving cell which supports V2X. In such cases, the UE may be unaware of signal quality parameters associated with other cells. Accordingly, the UE may determine a cell for reselection based on the V2X and RAT priorities, without consideration of signal quality. By informing the UE of priorities associated with cells that support the V2X service, the V2X service may reduce connection issues at the UE, which may increase the performance and quality of service at the UE for the V2X service.

Aspects of the disclosure are initially described in the context of wireless communications systems, a processing timeline, and a process flow Aspects of the disclosure are further illustrated by and described with reference to apparatus diagrams, system diagrams, and flowcharts that relate to V2X cell reselection.

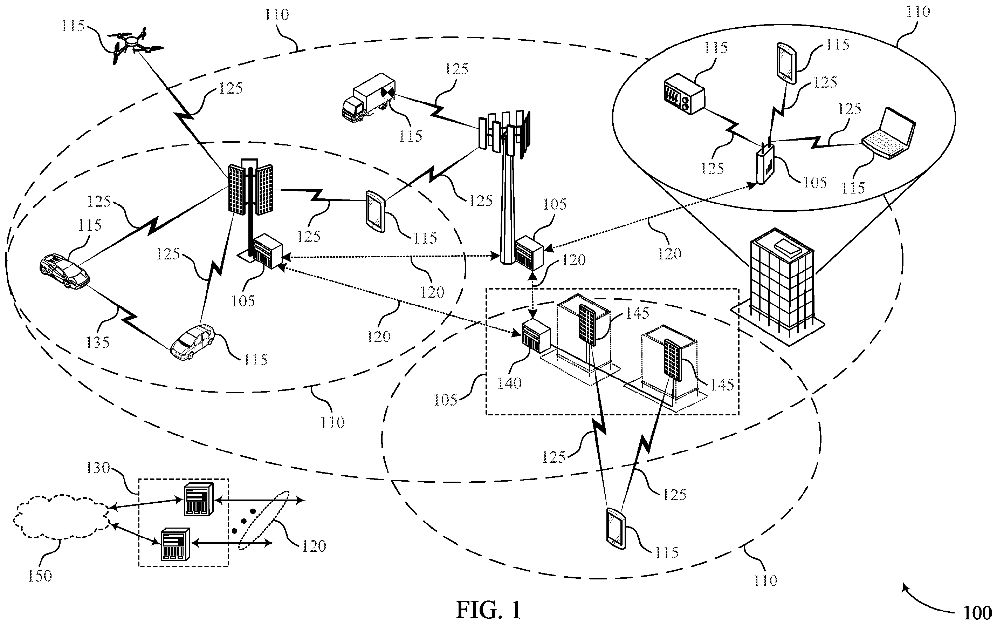

**FIG. 1** illustrates an example of a wireless communications system 100 that supports V2X cell reselection in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f})* sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using V2X communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to the network operators IP services 150. The operators IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

UEs 115 in the wireless communications system 100 may perform a cell reselection procedure when connected to a base station 105. A cell may be selected for connection based on measured signal quality parameters, dedicated RAT priorities, or both. In cases where a UE 115 supports a V2X service, the UE 115 may be unaware of which cells support the V2X service. If the UE 115 performs a cell reselection procedure, the UE 115 may select a cell served by a base station 105 that does not support the V2X service. In such cases, the UE 115 may perform additional cell reselection procedures in an attempt to establish connection with a cell served by a base station 105 that supports the V2X service. The additional cell reselection procedures (s) may lead to disruptions in the V2X service and introduce latency at the UE 115. According to aspects herein, a base station 105 associated with a serving cell of the UE 115 may transmit a priority indicator informing the UE 115 of a set of cells that support the V2X service. The priority indicator may also inform the UE 115 of a set of priorities associated with V2X frequencies supported by the set of cells. Based on the received priority indicator, the UE 115 may select a cell for connection that supports the V2X service. Informing the UE 115 of a set of V2X priorities may increase the performance and quality of service at the UE 115 for the V2X service.

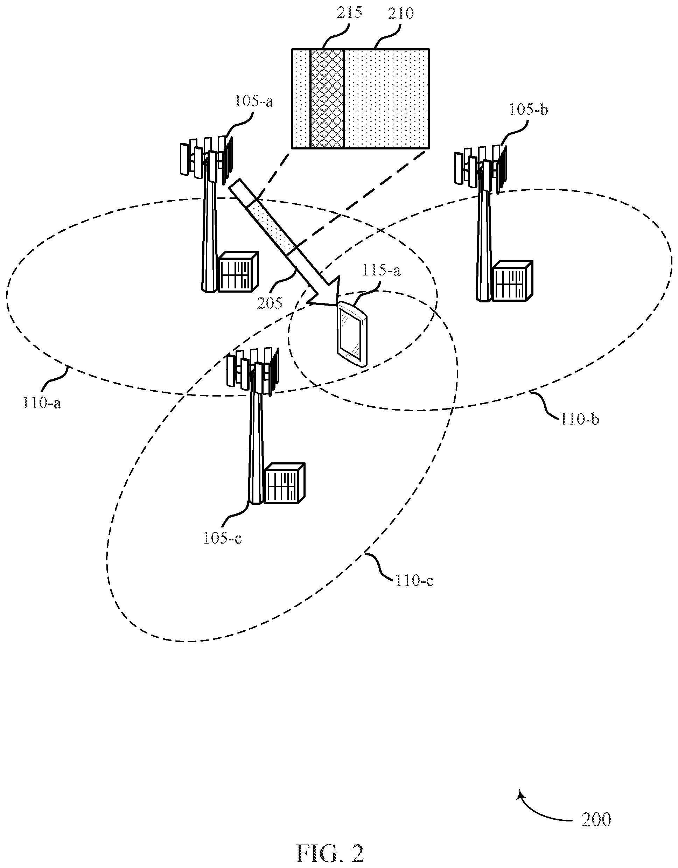

**FIG. 2** illustrates an example of a wireless communications system 200 that supports V2X cell reselection, in accordance with one or more aspects of the present disclosure. In some examples, the wireless communications system 200 may implement aspects of a wireless communications system 100. The wireless communications system 200 may include a UE 115-a which may be an example of a UE 115 as described with reference to FIG. 1. The wireless communications system 200 may also include a base station 105-a, a base station 105-b and a base station 105-c which may be examples of a base station 105 as described with reference to FIG. 1.

The base stations 105 may be associated with cells which provide wireless communications service within respective coverage areas 110. In some cases, the base station 105-a may be an example of a serving cell providing wireless communications service to UE 115-a. Accordingly, the base station 105-a may transmit information to a UE 115-a using downlink channel 205. In some examples, as described herein, the base station 105-a may inform the UE 115-a of one or more priorities associated with cells supporting a V2X service. The UE 115-a may perform cell reselection based on the V2X priorities.

The base station 105-a may determine a set of cells that support V2X communications. In some cases, the set of cells may include the cells associated with the base station 105-b and the base station 105-c. In some examples, determining the set of cells may include the base station 105-a receiving a backhaul message from neighboring cells indicating whether the neighboring cells support V2X communications. The base station 105-a may determine a set of priorities associated with a set of V2X frequencies supported by the set of cells. For example, the base station 105-a may determine that a V2X frequency supported by the base station 105-b may have a higher priority than V2X frequencies supported by base station 105-c. The base station 105-a may transmit a priority indicator 215 in a control message 210 on the downlink channel 205 informing the UE 115-a of the V2X priorities. In some cases, the priority indicator 215 may be included in an RRC connection release message. For example, the priority indicator 215 may be a field in an "idleModeMobilityControlInfo" message transmitted via the RRC connection release message. The UE 115-a may receive the priority indicator 215 from the base station 105-a.

In some cases, the base station 105-a may determine that at least one of the cells in the set of the cells is operating using a different RAT. The base station 105-a may determine a set of priorities associated with the different RATs. For example, if the base station 105-a is operating using NR and the base station 105-b is operating using LTE, the base station 105-a may determine that cells operating using NR have a higher priority than cells operating using LTE. In some cases, the RAT priorities may be examples of dedicated, or inherited, priorities. The base station 105-a may transmit the RAT priorities to the UE 115-a with the priority indicator 215.

Additionally or alternatively, the base station 105-a may determine a duration of a cell reselection timer for the UE 115-a. The base station 105-a may transmit the cell reselection timer duration in control signaling to the UE 115-a on the downlink channel 205. In response, the UE 115-a may trigger a cell reselection timer. In some cases, the cell reselection timer may provide a timing window during which the UE 1115-a may perform operations associated with a cell reselection procedure. The cell reselection timer may, in some examples, be an example of a T320 timer.

The UE 115-a may measure parameters of cells, including any combination of the base station 105-a, the base station 105-b, and the base station 105-c. In some cases, measuring parameters may include measuring an RSRP, an RSSI, an RSCP, an RSRQ, or any combination thereof associated with the cells. The UE 115-a may determine whether to perform a cell reselection procedure based on the measured parameters, the received priority indicator 215, the received RAT priorities, or any combination thereof. For example, the UE 115-a may detect whether a cell has V2X support based on the received priority indicator 215 and so may select a target cell for reselection based the V2X support. In one example, the UE 115-a may determine that the measured parameters associated with the base station 105-b and the base station 105-c satisfy a measurement threshold. Accordingly, the UE 115-a may determine that the base station 105-b and the base station 105-c are possible target cells for cell reselection. The UE 115-a may further determine, based on the received priority indicator 215 that a V2X frequency supported by the base station 105-b has a higher priority than V2X frequencies supported by base station 105-c. Accordingly, the UE 115-a may select base station 105-b for cell reselection.

In some cases, the UE 115-a may receive system information from a set of cells, including any combination of the base station 105-a, the base station 105-b, and the base station 105-c. Included with the system information may be an indication of a V2X configuration associated with each cell. In some examples, the system information may be received as part of a SIB. In some examples, the UE 115-a may determine a target cell for selection based on the received V2X configurations.

In some cases, the UE 115-a may support V2X service continuity and may only be able to receive a V2X service while connected to base station 105-a. In such cases, the UE 115-a may be unaware of the signal quality parameters of cells associated with base station 105-b and base station 105-c. Accordingly, the UE 115-a may determine a cell for reselection based on the V2X and RAT priorities, without consideration of signal quality.

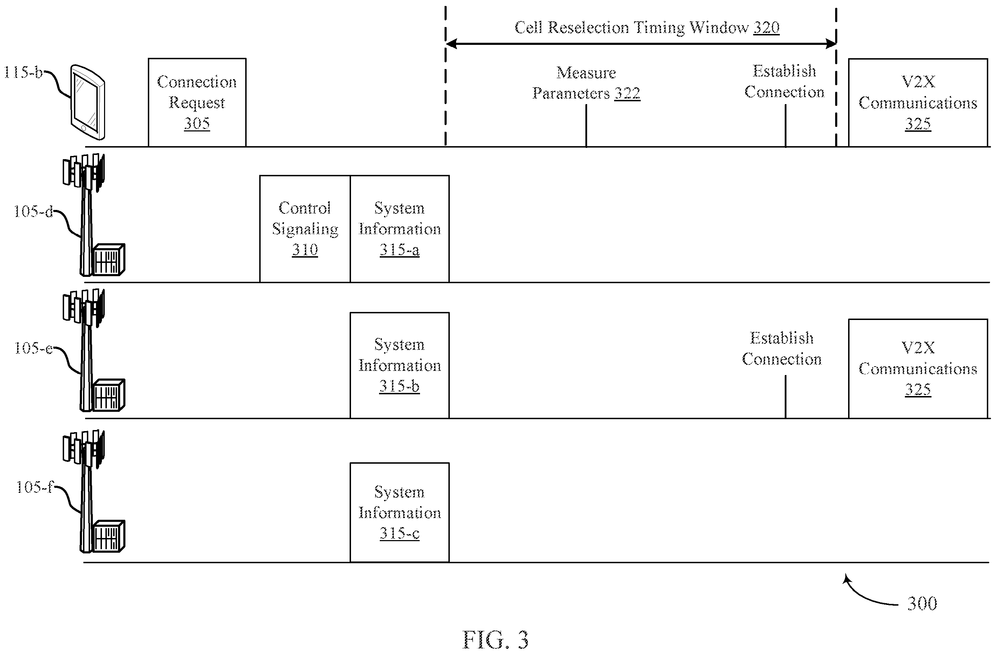

**FIG. 3** illustrates an example of a processing timeline 300 that supports V2X cell reselection, in accordance with one or more aspects of the present disclosure. In some examples, the processing timeline 300 may implement aspects of a wireless communications systems 100 or 200. For example, aspects of the processing timeline 300 may be implemented by a UE 115, one or more base stations 105, or a combination thereof. As illustrated, the processing timeline 300 shows an example cell reselection timing using V2X priorities.

The UE 115-b may establish a connection with base station 105-d. The cell associated with base station 105-d may be referred to as a serving cell for UE 115-b. The cells associated with the base station 105-e and the base station 105-f may be referred to as neighbor cells with respect to the UE 115-b. In some cases, establishing a connection may include the UE 115-b transmitting a connection request message 305 to the base station 105-d. In response to the connection request message, the base station 105-d may determine a duration of a cell reselection timer. Additionally or alternatively, the base station 105-d may determine that base station 105-e and base station 105-f support V2X communications and may determine a set of priorities associated with supported V2X frequencies. The base station 105-d may transmit control signaling 310 to the UE 115-d indicating the set of priorities and the duration of the cell reselection timer. In some examples, the control signaling may be included in an RRC connection release message and the duration of the cell reselection timer may be included in the RRC connection release message.

In some examples, the UE 115-b may receive system information messages 315 from any combination of base stations 105. In some cases, the system information message may be received in an SIB. The system information messages 315 may inform the UE 115-b of V2X configurations associated with each base station.

In response to receiving the control signaling 310, the UE may initiate a timer, establishing a cell reselection timing window 320. During the timing window 320, the UE 115-b may measure cell parameters 322 associated with any combination of the base stations 105-d, 105-e, or 105-f, and associated with the supported V2X frequencies. In some cases, measuring the cell parameters may include measuring signal quality parameters (e.g., RSRP, RSSI, RSRQ, etc.) associated with the base stations 105. The UE 115-b may determine whether the signal quality parameters satisfy a threshold. If the signal quality threshold is satisfied, the UE 115-b may determine that the associated cell may be suitable for selection.

Additionally or alternatively, the UE 115-b may consider the priorities associated with the V2X frequencies for each cell. In one example, the UE 115-b may determine that the signal quality associated with the base station 105-e and the base station 105-f both satisfy the threshold, but that a V2X frequency supported by the base station 105-e has a higher priority than the V2X frequencies associated with the base station 105-f. Accordingly, the UE 115-b may select the base station 105-e for connection. In response to establishing a connection, the UE 115-b and the base station 105-e may perform V2X communications 325. Implementing various aspects of the processing timeline 300 may increase the performance and quality of service for V2X services at the UE 115-b.

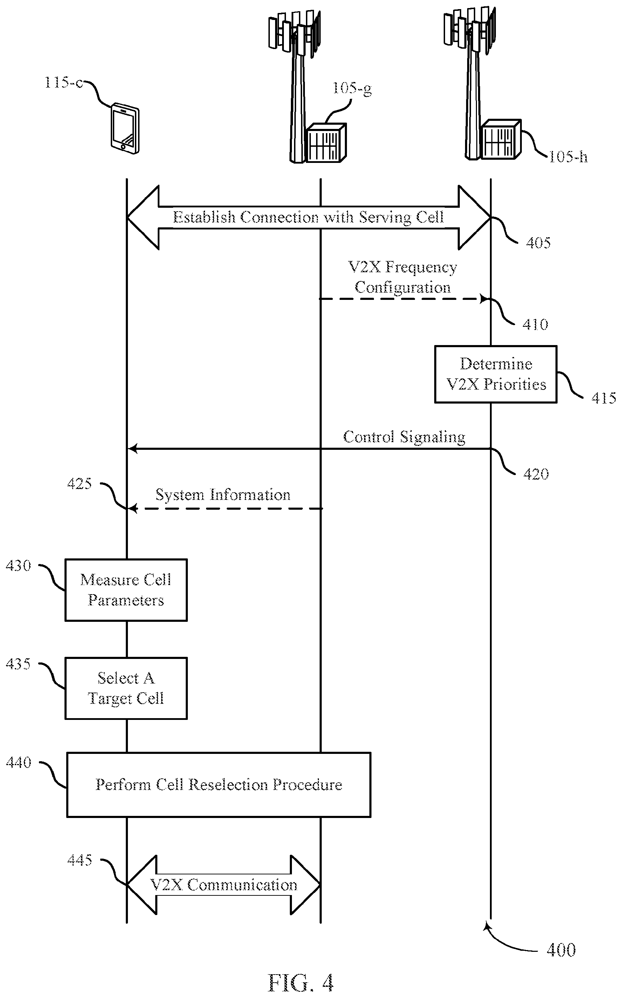

**FIG. 4** illustrates an example of a process flow 400 that supports V2X cell reselection, in accordance with one or more aspects of the present disclosure. In some examples, the process flow 400 may implement aspects of a wireless communications system 100 or 200, a processing timeline 300, or a combination thereof. The process flow 400 may include a UE 115-c, a base station 105-g, and a base station 105-h, which may be examples of the corresponding devices described herein. Alternative examples of the following may be implemented, where some processes are performed in a different order than described or are not performed at all. In some cases, processes may include additional features not mentioned below, or further processes may be added.

At 405, the UE 115-c may establish a connection with the base station 105-h. In some cases, a cell associated with base station 105-h may be referred to as a serving cell for UE 115-c.

At 410, the base station 105-h may receive a backhaul message from the base station 105-g. The backhaul message may include an indication of V2X frequencies supported by the base station 105-g. In some cases, the backhaul message may also include an indication of priorities associated with the supported V2X frequencies. in some cases, the base station 105-h may receive backhaul messages from additional base stations 105 associated with neighboring cells.

At 415, the base station 105-h may determine a set of priorities associated with V2X frequencies supported by the base station 105-g. In some cases, the base station 105-h may determine priorities associated with V2X frequencies supported by additional base stations 105.

At 420, the base station 105-h may transmit control signaling to the UE 115-c. The control signaling may indicate to the UE 115-c the set of V2X priorities determined by the base station. In some cases, the control signaling may include a set priorities associated with different RATs used by neighboring cells. In some cases, the control signaling may include a duration of a cell reselection timer for the UE 115-c. In some examples, the control signaling may include an RRC connection release message.

At 425, the UE 115-c may receive system information message from base station 105-g. In some cases, the system information message may be an SIB. The system information message may indicate a V2X configuration for the base station 105-g. In some cases, the V2X configuration may include parameters indicating supported V2X frequencies, supported V2X services, among others. In some cases, the UE 115-c may receive system information messages from additional base stations 105 associated with neighboring cells.

At 430, the UE 115-c may measure cell parameters (e.g., RSRP, RSSI, RSCP, RSRQ, etc.) associated with the base station 105-g, the base station 105-h, additional base stations 105, or any combination thereof. The UE 115-c may use the measured cell parameters to determine whether a signal quality associated with the base stations 105 satisfy a threshold for cell reselection.

At 435, the UE 115-c may select a target cell for reselection based on the measured cell parameters, the received V2X priorities, the received RAT priorities, or any combination thereof. In some cases, the UE 115-c may determine that a signal quality associated with the base station 105-g satisfies the threshold for cell reselection and that the base station 105-g supports V2X communication. Additionally or alternatively, the UE 115-c may determine that a V2X frequency associated with the base station 105-g has a higher priority than V2X frequencies associated with other base stations 105. Accordingly, the UE 115-c may select the base station 105-g as a target for cell reselection.

At 440, the UE 115-c may perform a cell reselection procedure to establish a connection with the base station 105-g.

At 445, the UE 115-c and the base station 105-g may perform V2X communications based on the established connection.

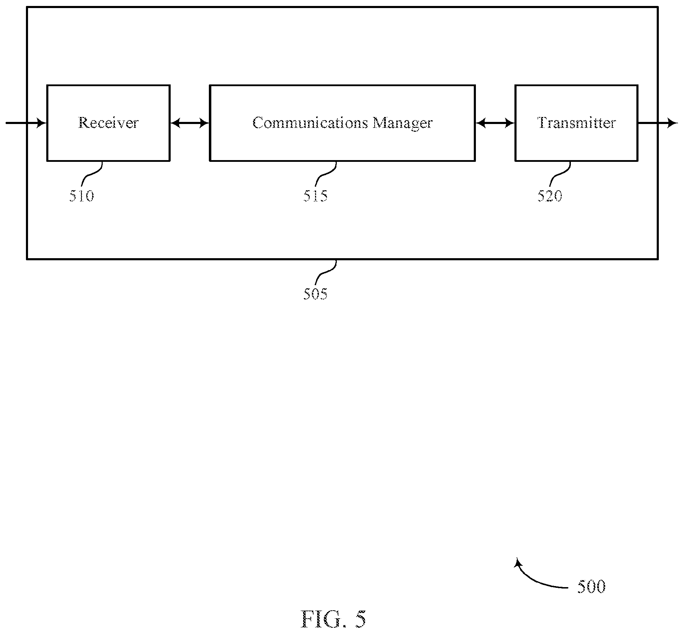

**FIG. 5** shows a block diagram 500 of a device 505 that supports V2X cell reselection in accordance with aspects of the present disclosure. The device 505 may be an example of aspects of a UE 115 as described herein. The device 505 may include a receiver 510, a communications manager 515, and a transmitter 520. The device 505 may also include a processor. Each of these components may be in communication with one another (e.g., via one or more buses).

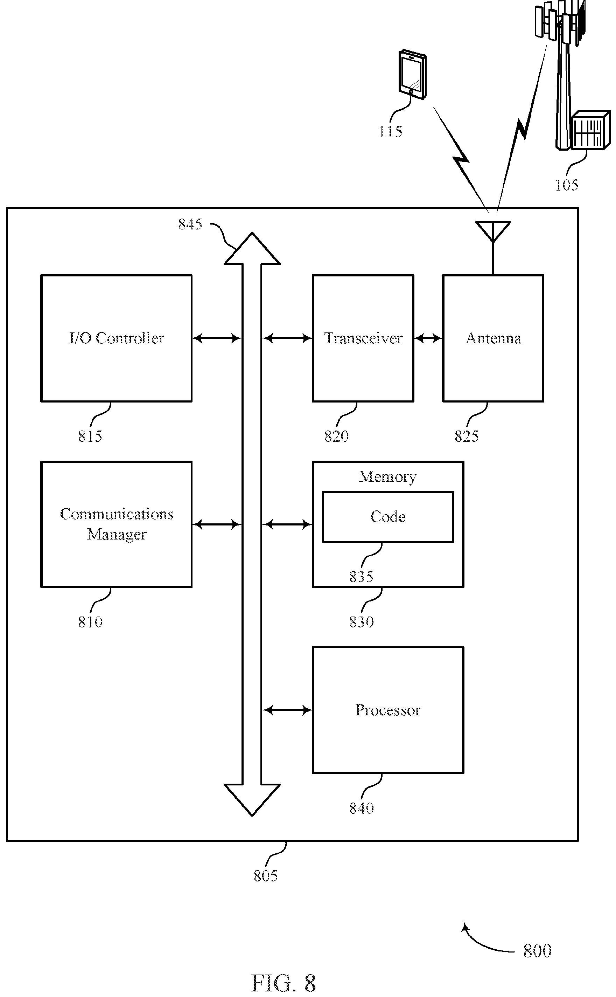

The receiver 510 may receive information such as packets, user data, or control information associated with various information channels (e.g., control channels, data channels, and information related to V2X cell reselection, etc.). Information may be passed on to other components of the device 505. The receiver 510 may be an example of aspects of the transceiver 820 described with reference to FIG. 8. The receiver 510 may utilize a single antenna or a set of antennas.

The communications manager 515 may receive, from a serving cell of the UE, control signaling that indicates a set of one or more cells that support V2X communications and priority information for a set of V2X frequencies supported by the set of one or more cells, measure one or more parameters of a target cell of the set of one or more cells, and perform a cell reselection procedure to establish connectivity with the target cell using a first V2X frequency of the set of V2X frequencies based on the priority information and the measured one or more parameters. The communications manager 515 may be an example of aspects of the communications manager 810 described herein.

The communications manager 515, or its sub-components, may be implemented in hardware, code (e.g., software or firmware) executed by a processor, or any combination thereof. If implemented in code executed by a processor, the functions of the communications manager 515, or its sub-components may be executed by a general-purpose processor, a digital signal processor (DSP), an application-specific integrated circuit (ASIC), a field programmable gate array (FPGA) or other programmable logic device, discrete gate or transistor logic, discrete hardware components, or any combination thereof designed to perform the functions described in the present disclosure.

The communications manager 515, or its sub-components, may be physically located at various positions, including being distributed such that portions of functions are implemented at different physical locations by one or more physical components. In some examples, the communications manager 515, or its sub-components, may be a separate and distinct component in accordance with various aspects of the present disclosure. In some examples, the communications manager 515, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 520 may transmit signals generated by other components of the device 505. In some examples, the transmitter 520 may be collocated with a receiver 510 in a transceiver module. For example, the transmitter 520 may be an example of aspects of the transceiver 820 described with reference to FIG. 8. The transmitter 520 may utilize a single antenna or a set of antennas.

In some examples, the communications manager 515 may be implemented as an integrated circuit or chipset for a mobile device modem, and the receiver 510 and transmitter 520 may be implemented as analog components (e.g., amplifiers, filters, antennas) coupled with the mobile device modem to enable wireless transmission and reception over one or more bands.

The communications manager 515 as described herein may be implemented to realize one or more potential advantages. One implementation may allow the device 505 to be provided with V2X priority information that may be used for cell reselection between the device 505 and a cell supported by a base station, as described herein. Based on the techniques for cell reselection, the device 505 may support V2X service continuity through cell reselection procedures with cells that support the V2X service.

As such, the device 505 may increase the likelihood of successful V2X communications and continuity, which may allow the device 505 to more efficiently power a processor or one or more processing units associated with cell reselection and V2X communications, enable the device 505 to save power and increase battery life.

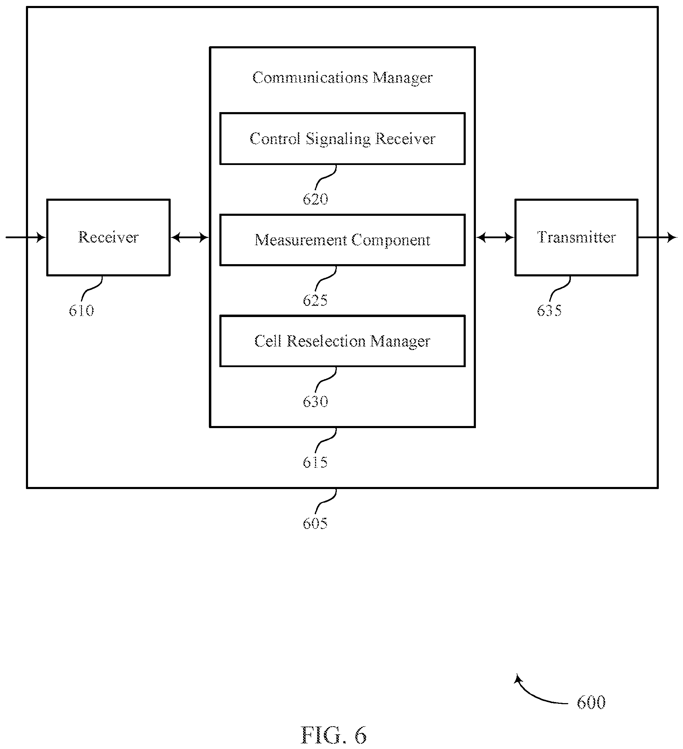

**FIG. 6** shows a block diagram 600 of a device 605 that supports V2X cell reselection in accordance with aspects of the present disclosure. The device 605 may be an example of aspects of a device 505, or a UE 115 as described herein. The device 605 may include a receiver 610, a communications manager 615, and a transmitter 635. The device 605 may also include a processor. Each of these components may be in communication with one another (e.g., via one or more buses).

The receiver 610 may receive information such as packets, user data, or control information associated with various information channels (e.g., control channels, data channels, and information related to V2X cell reselection, etc.). Information may be passed on to other components of the device 605. The receiver 610 may be an example of aspects of the transceiver 820 described with reference to FIG. 8. The receiver 610 may utilize a single antenna or a set of antennas.

The communications manager 615 may be an example of aspects of the communications manager 515 as described herein. The communications manager 615 may include a control signaling receiver 620, a measurement component 625, and a cell reselection manager 630. The communications manager 615 may be an example of aspects of the communications manager 810 described herein.

The control signaling receiver 620 may receive, from a serving cell of the UE, control signaling that indicates a set of one or more cells that support V2X communications and priority information for a set of V2X frequencies supported by the set of one or more cells.

The measurement component 625 may measure one or more parameters of a target cell of the set of one or more cells.

The cell reselection manager 630 may perform a cell reselection procedure to establish connectivity with the target cell using a first V2X frequency of the set of V2X frequencies based on the priority information and the measured one or more parameters.

The transmitter 635 may transmit signals generated by other components of the device 605. In some examples, the transmitter 635 may be collocated with a receiver 610 in a transceiver module. For example, the transmitter 635 may be an example of aspects of the transceiver 820 described with reference to FIG. 8. The transmitter 635 may utilize a single antenna or a set of antennas.

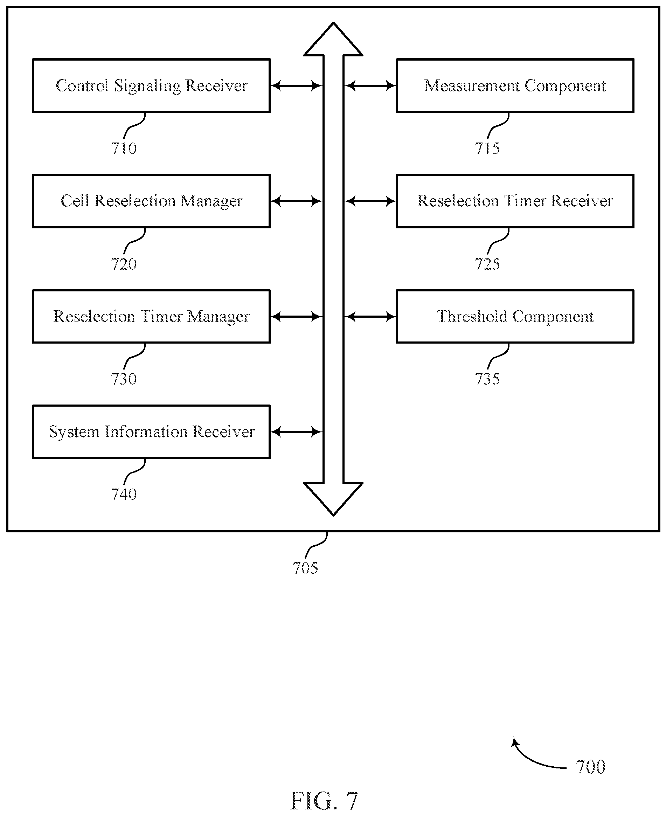

**FIG. 7** shows a block diagram 700 of a communications manager 705 that supports V2X cell reselection in accordance with aspects of the present disclosure. The communications manager 705 may be an example of aspects of a communications manager 515, a communications manager 615, or a communications manager 810 described herein. The communications manager 705 may include a control signaling receiver 710, a measurement component 715, a cell reselection manager 720, a reselection timer receiver 725, a reselection timer manager 730, a threshold component 735, and a system information receiver 740. Each of these modules may communicate, directly or indirectly, with one another (e.g., via one or more buses).

The control signaling receiver 710 may receive, from a serving cell of the UE, control signaling that indicates a set of one or more cells that support V2X communications and priority information for a set of V2X frequencies supported by the set of one or more cells.

In some examples, the control signaling receiver 710 may receive a RRC connection release message including the set of one or more cells that support V2X communications and the priority information for the set of V2X frequencies supported by the set of one or more cells. In some cases, the set of one or more cells includes the serving cell and one or more neighboring cells. In some cases, the serving cell and the target cell operate using different RATs.

The measurement component 715 may measure one or more parameters of a target cell of the set of one or more cells. In some examples, the measurement component 715 may measure an RSRP, RSSI, RSCP, RSRQ, or any combination thereof associated with at least one cell of the set of one or more cells including the target cell.

The cell reselection manager 720 may perform a cell reselection procedure to establish connectivity with the target cell using a first V2X frequency of the set of V2X frequencies based on the priority information and the measured one or more parameters. In some examples, the cell reselection manager 720 may perform the cell reselection procedure with the target cell prior to expiration of the cell reselection timer.

The reselection timer receiver 725 may receive an indication of a duration for a cell reselection timer from the serving cell. In some examples, receiving, from the serving cell, a connection release message that includes the indication of the duration for the cell reselection timer.

The reselection timer manager 730 may initiate the cell reselection timer based on receiving the indication.

The threshold component 735 may determine that the measured one or more parameters of the target cell satisfy a measurement threshold, where the cell reselection procedure is performed based on the measured one or more parameters satisfying the measurement threshold.

The system information receiver 740 may receive a system information message from the target cell based on receiving the control signaling, the system information message indicating a V2X configuration of the target cell, where the cell reselection procedure is performed based on the V2X configuration. In some examples, the system information receiver 740 may receive a SIB within the system information message.

**FIG. 8** shows a diagram of a system 800 including a device 805 that supports V2X cell reselection in accordance with aspects of the present disclosure. The device 805 may be an example of or include the components of device 505, device 605, or a UE 115 as described herein. The device 805 may include components for bi-directional voice and data communications including components for transmitting and receiving communications, including a communications manager 810, an I/O controller 815, a transceiver 820, an antenna 825, memory 830, and a processor 840. These components may be in electronic communication via one or more buses (e.g., bus 845).

The communications manager 810 may receive, from a serving cell of the UE, control signaling that indicates a set of one or more cells that support V2X communications and priority information for a set of V2X frequencies supported by the set of one or more cells, measure one or more parameters of a target cell of the set of one or more cells, and perform a cell reselection procedure to establish connectivity with the target cell using a first V2X frequency of the set of V2X frequencies based on the priority information and the measured one or more parameters.

The I/O controller 815 may manage input and output signals for the device 805. The I/O controller 815 may also manage peripherals not integrated into the device 805. In some cases, the I/O controller 815 may represent a physical connection or port to an external peripheral. In some cases, the I/O controller 815 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 815 may represent or interact with a modem, a keyboard, a mouse, a touchscreen, or a similar device. In some cases, the I/O controller 815 may be implemented as part of a processor. In some cases, a user may interact with the device 805 via the I/O controller 815 or via hardware components controlled by the I/O controller 815.

The transceiver 820 may communicate bi-directionally, via one or more antennas, wired, or wireless links as described above. For example, the transceiver 820 may represent a wireless transceiver and may communicate bi-directionally with another wireless transceiver. The transceiver 820 may also include a modem to modulate the packets and provide the modulated packets to the antennas for transmission, and to demodulate packets received from the antennas.

In some cases, the device 805 may include a single antenna 825, or the device 805 may have more than one antenna 825, which may be capable of concurrently transmitting or receiving multiple wireless transmissions.

The memory 830 may include random access memory (RAM) and read only memory (ROM). The memory 830 may store computer-readable, computer-executable code 835 including instructions that, when executed, cause the processor to perform various functions described herein. In some cases, the memory 830 may contain, among other things, a basic I/O system (BIOS) which may control basic hardware or software operation such as the interaction with peripheral components or devices.

The processor 840 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor 840 may be configured to operate a memory array using a memory controller. In other cases, a memory controller may be integrated into the processor 840. The processor 840 may be configured to execute computer-readable instructions stored in a memory (e.g., the memory 830) to cause the device 805 to perform various functions (e.g., functions or tasks supporting V2X cell reselection).

The code 835 may include instructions to implement aspects of the present disclosure, including instructions to support wireless communications. The code 835 may be stored in a non-transitory computer-readable medium such as system memory or other type of memory. In some cases, the code 835 may not be directly executable by the processor 840 but may cause a computer (e.g., when compiled and executed) to perform functions described herein.

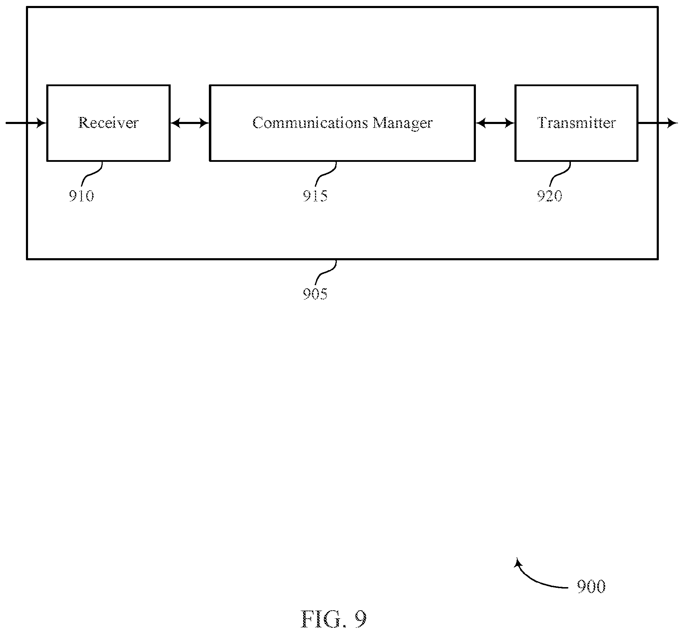

**FIG. 9** shows a block diagram 900 of a device 905 that supports V2X cell reselection in accordance with aspects of the present disclosure. The device 905 may be an example of aspects of a base station 105 as described herein. The device 905 may include a receiver 910, a communications manager 915, and a transmitter 920. The device 905 may also include a processor. Each of these components may be in communication with one another (e.g., via one or more buses).

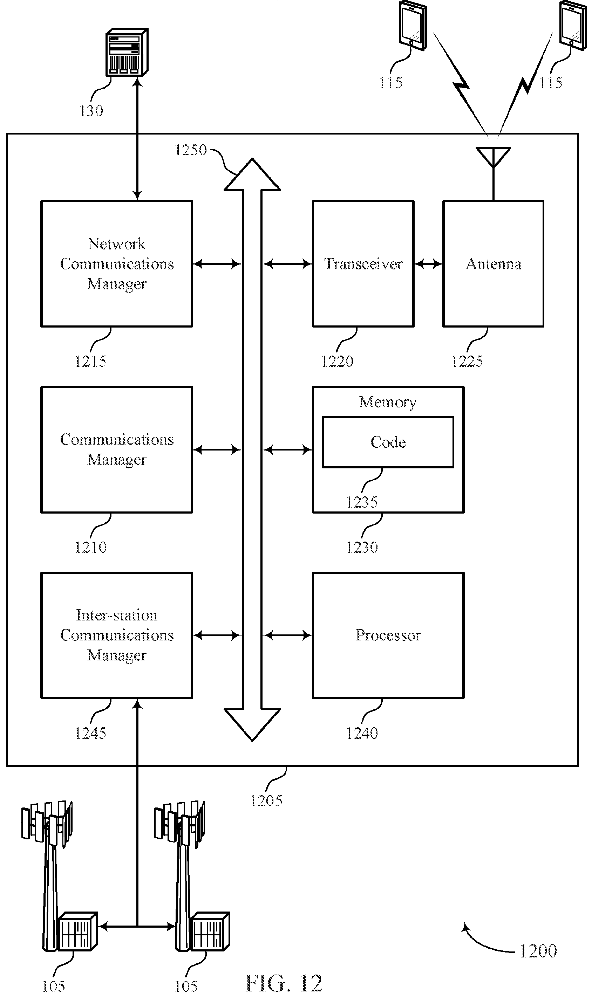

The receiver 910 may receive information such as packets, user data, or control information associated with various information channels (e.g., control channels, data channels, and information related to V2X cell reselection, etc.). Information may be passed on to other components of the device 905. The receiver 910 may be an example of aspects of the transceiver 1220 described with reference to FIG. 12. The receiver 910 may utilize a single antenna or a set of antennas.

The communications manager 915 may determine a set of one or more cells that support V2X communications and priority information for a set of V2X frequencies supported by the set of one or more cells and transmit, to a UE, control signaling that indicates the set of one or more cells that support V2X communications and the priority information for the set of V2X frequencies supported by the set of one or more cells. The communications manager 915 may be an example of aspects of the communications manager 1210 described herein.

The communications manager 915, or its sub-components, may be implemented in hardware, code (e.g., software or firmware) executed by a processor, or any combination thereof. If implemented in code executed by a processor, the functions of the communications manager 915, or its sub-components may be executed by a general-purpose processor, a DSP, an ASIC, an FPGA or other programmable logic device, discrete gate or transistor logic, discrete hardware components, or any combination thereof designed to perform the functions described in the present disclosure.

The communications manager 915, or its sub-components, may be physically located at various positions, including being distributed such that portions of functions are implemented at different physical locations by one or more physical components. In some examples, the communications manager 915, or its sub-components, may be a separate and distinct component in accordance with various aspects of the present disclosure. In some examples, the communications manager 915, or its sub-components, may be combined with one or more other hardware components, including but not limited to an I/O component, a transceiver, a network server, another computing device, one or more other components described in the present disclosure, or a combination thereof in accordance with various aspects of the present disclosure.

The transmitter 920 may transmit signals generated by other components of the device 905. In some examples, the transmitter 920 may be collocated with a receiver 910 in a transceiver module. For example, the transmitter 920 may be an example of aspects of the transceiver 1220 described with reference to FIG. 12. The transmitter 920 may utilize a single antenna or a set of antennas.

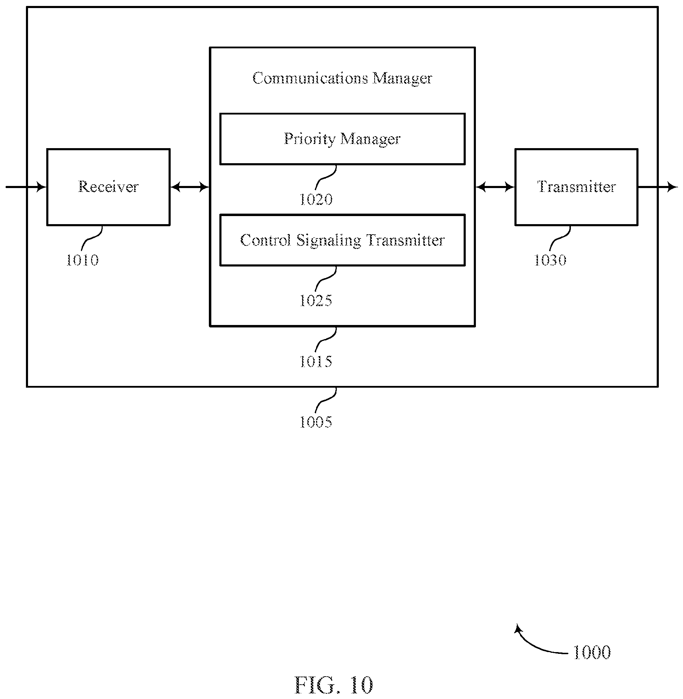

**FIG. 10** shows a block diagram 1000 of a device 1005 that supports V2X cell reselection in accordance with aspects of the present disclosure. The device 1005 may be an example of aspects of a device 905, or a base station 105 as described herein. The device 1005 may include a receiver 1010, a communications manager 1015, and a transmitter 1030. The device 1005 may also include a processor. Each of these components may be in communication with one another (e.g., via one or more buses).

The receiver 1010 may receive information such as packets, user data, or control information associated with various information channels (e.g., control channels, data channels, and information related to V2X cell reselection, etc.). Information may be passed on to other components of the device 1005. The receiver 1010 may be an example of aspects of the transceiver 1220 described with reference to FIG. 12. The receiver 1010 may utilize a single antenna or a set of antennas.

The communications manager 1015 may be an example of aspects of the communications manager 915 as described herein. The communications manager 1015 may include a priority manager 1020 and a control signaling transmitter 1025. The communications manager 1015 may be an example of aspects of the communications manager 1210 described herein.

The priority manager 1020 may determine a set of one or more cells that support V2X communications and priority information for a set of V2X frequencies supported by the set of one or more cells.

The control signaling transmitter 1025 may transmit, to a UE, control signaling that indicates the set of one or more cells that support V2X communications and the priority information for the set of V2X frequencies supported by the set of one or more cells.

The transmitter 1030 may transmit signals generated by other components of the device 1005. In some examples, the transmitter 1030 may be collocated with a receiver 1010 in a transceiver module. For example, the transmitter 1030 may be an example of aspects of the transceiver 1220 described with reference to FIG. 12. The transmitter 1030 may utilize a single antenna or a set of antennas.

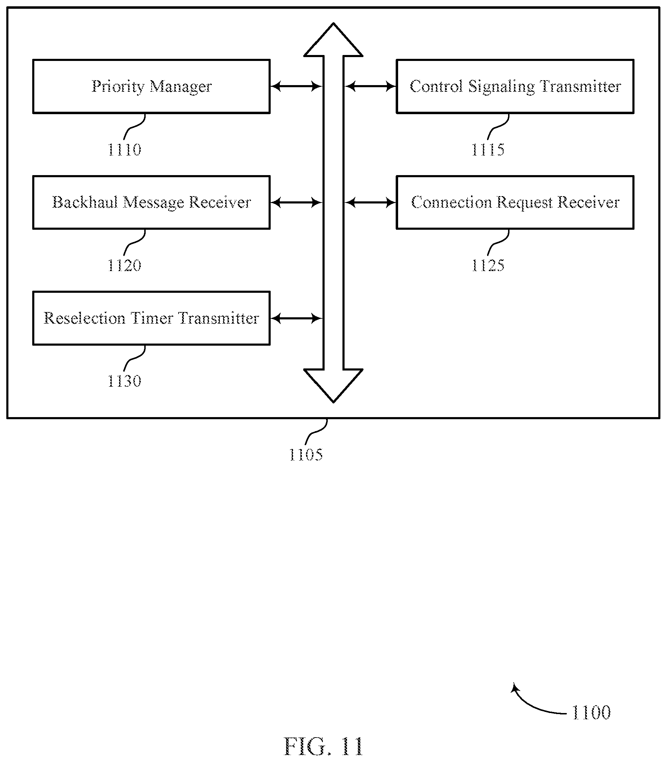

**FIG. 11** shows a block diagram 1100 of a communications manager 1105 that supports V2X cell reselection in accordance with aspects of the present disclosure. The communications manager 1105 may be an example of aspects of a communications manager 915, a communications manager 1015, or a communications manager 1210 described herein. The communications manager 1105 may include a priority manager 1110, a control signaling transmitter 1115, a backhaul message receiver 1120, a connection request receiver 1125, and a reselection timer transmitter 1130. Each of these modules may communicate, directly or indirectly, with one another (e.g., via one or more buses).

The priority manager 1110 may determine a set of one or more cells that support V2X communications and priority information for a set of V2X frequencies supported by the set of one or more cells.

The control signaling transmitter 1115 may transmit, to a UE, control signaling that indicates the set of one or more cells that support V2X communications and the priority information for the set of V2X frequencies supported by the set of one or more cells. In some examples, the control signaling transmitter 1115 may transmit a RRC connection release message that indicates the set of one or more cells that support V2X communications and the priority information for the set of V2X frequencies supported by the set of one or more cells.

The backhaul message receiver 1120 may receive, from a neighboring cell, a backhaul message indicating whether the neighboring cell supports V2X communications.

The connection request receiver 1125 may receive a connection request message from the UE.

The reselection timer transmitter 1130 may transmit, in response to the connection request message, an indication of a duration for a cell reselection timer to the UE. In some examples, transmitting a connection release message that includes the indication of the duration for the cell reselection timer to the UE.

**FIG. 12** shows a diagram of a system 1200 including a device 1205 that supports V2X cell reselection in accordance with aspects of the present disclosure. The device 1205 may be an example of or include the components of device 905, device 1005, or a base station 105 as described herein. The device 1205 may include components for bi-directional voice and data communications including components for transmitting and receiving communications, including a communications manager 1210, a network communications manager 1215, a transceiver 1220, an antenna 1225, memory 1230, a processor 1240, and an inter-station communications manager 1245. These components may be in electronic communication via one or more buses (e.g., bus 1250).

The communications manager 1210 may determine a set of one or more cells that support V2X communications and priority information for a set of V2X frequencies supported by the set of one or more cells and transmit, to a UE, control signaling that indicates the set of one or more cells that support V2X communications and the priority information for the set of V2X frequencies supported by the set of one or more cells.

The network communications manager 1215 may manage communications with the core network (e.g., via one or more wired backhaul links). For example, the network communications manager 1215 may manage the transfer of data communications for client devices, such as one or more UEs 115.

The transceiver 1220 may communicate bi-directionally, via one or more antennas, wired, or wireless links as described above. For example, the transceiver 1220 may represent a wireless transceiver and may communicate bi-directionally with another wireless transceiver. The transceiver 1220 may also include a modem to modulate the packets and provide the modulated packets to the antennas for transmission, and to demodulate packets received from the antennas.

In some cases, the device may include a single antenna 1225, or the device 1205 may have more than one antenna 1225, which may be capable of concurrently transmitting or receiving multiple wireless transmissions.

The memory 1230 may include RAM, ROM, or a combination thereof. The memory 1230 may store computer-readable code 1235 including instructions that, when executed by a processor (e.g., the processor 1240) cause the device to perform various functions described herein. In some cases, the memory 1230 may contain, among other things, a BIOS which may control basic hardware or software operation such as the interaction with peripheral components or devices.

The processor 1240 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some cases, a memory controller may be integrated into processor 1240. The processor 1240 may be configured to execute computer-readable instructions stored in a memory (e.g., the memory 1230) to cause the device 1205 to perform various functions (e.g., functions or tasks supporting V2X cell reselection).

The inter-station communications manager 1245 may manage communications with other base station 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communication network technology to provide communication between base stations 105.

The code 1235 may include instructions to implement aspects of the present disclosure, including instructions to support wireless communications. The code 1235 may be stored in a non-transitory computer-readable medium such as system memory or other type of memory. In some cases, the code 1235 may not be directly executable by the processor 1240 but may cause a computer (e.g., when compiled and executed) to perform functions described herein.

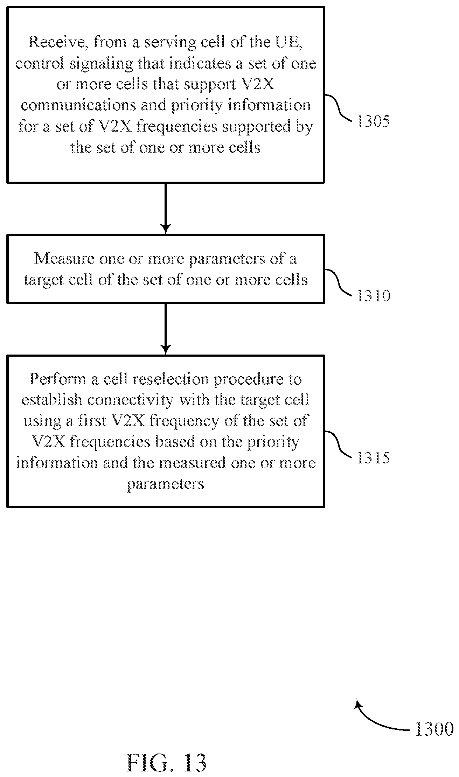

**FIG. 13** shows a flowchart illustrating a method 1300 that supports V2X cell reselection in accordance with the present invention. The operations of method 1300 are implemented by a UE 115 or its components as described herein. For example, the operations of method 1300 may be performed by a communications manager as described with reference to FIGs. 5 through 8. In some examples, a UE may execute a set of instructions to control the functional elements of the UE to perform the functions described below. Additionally or alternatively, a UE may perform aspects of the functions described below using special-purpose hardware.

At 1305, the UE receives, from a serving cell of the UE, control signaling that indicates a set of one or more cells that support V2X communications and priority information for a set of V2X frequencies supported by the set of one or more cells. The operations of 1305 may be performed according to the methods described herein. In some examples, aspects of the operations of 1305 may be performed by a control signaling receiver as described with reference to FIGs. 5 through 8.

At 1310, the UE measures one or more parameters of a target cell of the set of one or more cells. The operations of 1310 may be performed according to the methods described herein. In some examples, aspects of the operations of 1310 may be performed by a measurement component as described with reference to FIGs. 5 through 8.

At 1315, the UE performs a cell reselection procedure to establish connectivity with the target cell using a first V2X frequency of the set of V2X frequencies based on the priority information and the measured one or more parameters. The operations of 1315 may be performed according to the methods described herein. In some examples, aspects of the operations of 1315 may be performed by a cell reselection manager as described with reference to FIGs. 5 through 8.

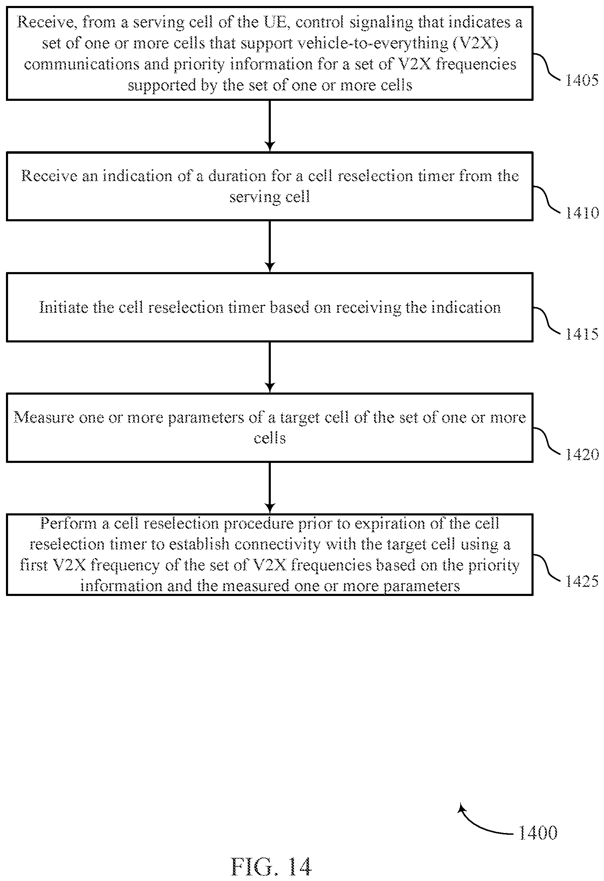

**FIG. 14** shows a flowchart illustrating a method 1400 that supports V2X cell reselection in accordance with aspects of the present disclosure. The operations of method 1400 may be implemented by a UE 115 or its components as described herein. For example, the operations of method 1400 may be performed by a communications manager as described with reference to FIGs. 5 through 8. In some examples, a UE may execute a set of instructions to control the functional elements of the UE to perform the functions described below. Additionally or alternatively, a UE may perform aspects of the functions described below using special-purpose hardware.

At 1405, the UE may receive, from a serving cell of the UE, control signaling that indicates a set of one or more cells that support V2X communications and priority information for a set of V2X frequencies supported by the set of one or more cells. The operations of 1405 may be performed according to the methods described herein. In some examples, aspects of the operations of 1405 may be performed by a control signaling receiver as described with reference to FIGs. 5 through 8.

At 1410, the UE may receive an indication of a duration for a cell reselection timer from the serving cell. The operations of 1410 may be performed according to the methods described herein. In some examples, aspects of the operations of 1410 may be performed by a reselection timer receiver as described with reference to FIGs. 5 through 8.

At 1415, the UE may initiate the cell reselection timer based on receiving the indication. The operations of 1415 may be performed according to the methods described herein. In some examples, aspects of the operations of 1415 may be performed by a reselection timer manager as described with reference to FIGs. 5 through 8.

At 1420, the UE may measure one or more parameters of a target cell of the set of one or more cells. The operations of 1420 may be performed according to the methods described herein. In some examples, aspects of the operations of 1420 may be performed by a measurement component as described with reference to FIGs. 5 through 8.

At 1425, the UE may perform a cell reselection procedure prior to the expiration of the cell reselection timer to establish connectivity with the target cell using a first V2X frequency of the set of V2X frequencies based on the priority information and the measured one or more parameters. The operations of 1425 may be performed according to the methods described herein. In some examples, aspects of the operations of 1425 may be performed by a cell reselection manager as described with reference to FIGs. 5 through 8. In some examples, aspects of the operations of 1425 may be performed by a cell reselection manager as described with reference to FIGs. 5 through 8.

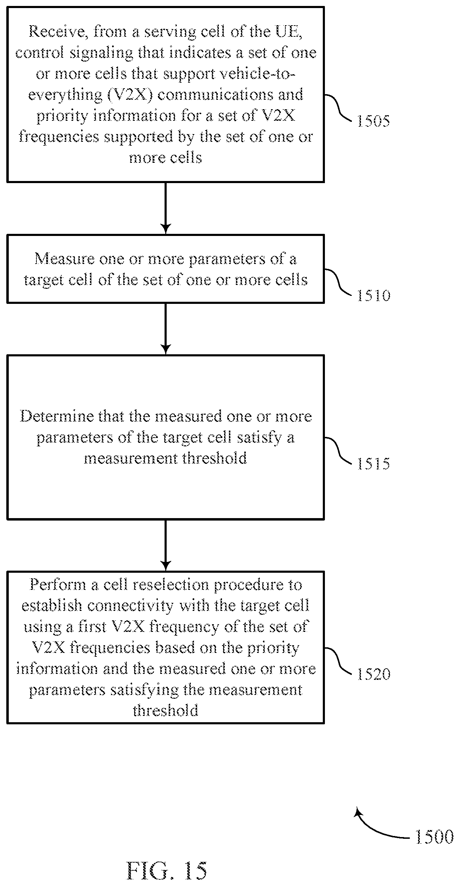

**FIG. 15** shows a flowchart illustrating a method 1500 that supports V2X cell reselection in accordance with aspects of the present disclosure. The operations of method 1500 may be implemented by a UE 115 or its components as described herein. For example, the operations of method 1500 may be performed by a communications manager as described with reference to FIGs. 5 through 8. In some examples, a UE may execute a set of instructions to control the functional elements of the UE to perform the functions described below. Additionally or alternatively, a UE may perform aspects of the functions described below using special-purpose hardware.

At 1505, the UE may receive, from a serving cell of the UE, control signaling that indicates a set of one or more cells that support V2X communications and priority information for a set of V2X frequencies supported by the set of one or more cells. The operations of 1505 may be performed according to the methods described herein. In some examples, aspects of the operations of 1505 may be performed by a control signaling receiver as described with reference to FIGs. 5 through 8.

At 1510, the UE may measure one or more parameters of a target cell of the set of one or more cells. The operations of 1510 may be performed according to the methods described herein. In some examples, aspects of the operations of 1510 may be performed by a measurement component as described with reference to FIGs. 5 through 8.

At 1515, the UE may determine that the measured one or more parameters of the target cell satisfy a measurement threshold. The operations of 1515 may be performed according to the methods described herein. In some examples, aspects of the operations of 1515 may be performed by a threshold component as described with reference to FIGs. 5 through 8.

At 1520, the UE may perform a cell reselection procedure to establish connectivity with the target cell using a first V2X frequency of the set of V2X frequencies based on the priority information and the measured one or more parameters satisfying the measurement threshold. The operations of 1520 may be performed according to the methods described herein. In some examples, aspects of the operations of 1520 may be performed by a cell reselection manager as described with reference to FIGs. 5 through 8.

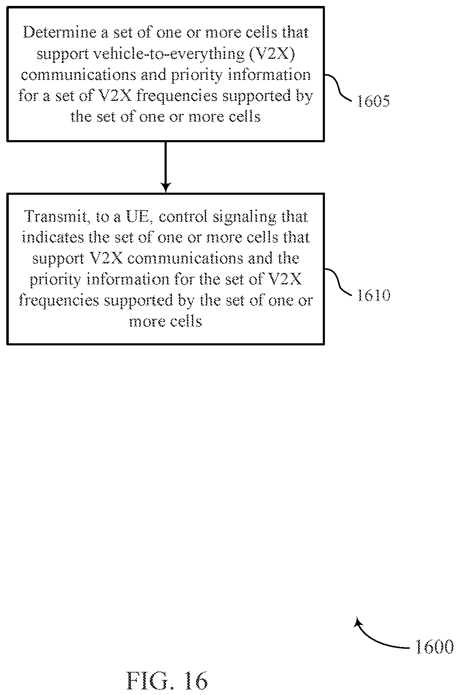

**FIG. 16** shows a flowchart illustrating a method 1600 that supports V2X cell reselection in accordance with the present invention. The operations of method 1600 may be implemented by a base station 105 or its components as described herein. For example, the operations of method 1600 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1605, the base station determines a set of one or more cells that support V2X communications and priority information for a set of V2X frequencies supported by the set of one or more cells. The operations of 1605 may be performed according to the methods described herein. In some examples, aspects of the operations of 1605 may be performed by a priority manager as described with reference to FIGs. 9 through 12.

At 1610, the base station transmits, to a UE, control signaling that indicates the set of one or more cells that support V2X communications and the priority information for the set of V2X frequencies supported by the set of one or more cells. The operations of 1610 may be performed according to the methods described herein. In some examples, aspects of the operations of 1610 may be performed by a control signaling transmitter as described with reference to FIGs. 9 through 12.

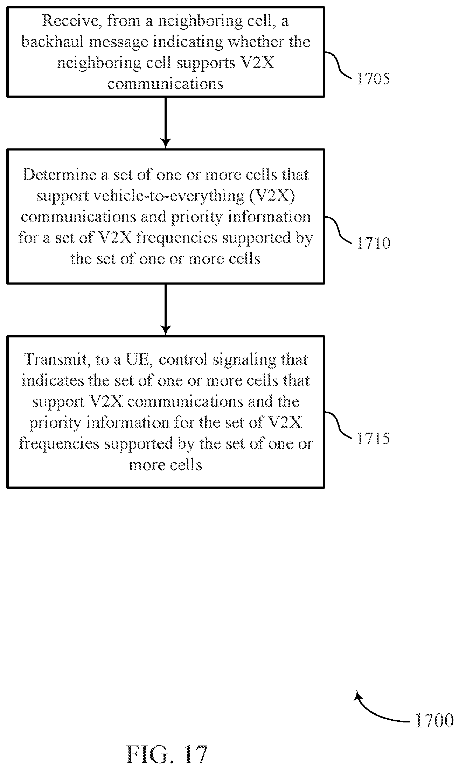

**FIG. 17** shows a flowchart illustrating a method 1700 that supports V2X cell reselection in accordance with aspects of the present disclosure. The operations of method 1700 may be implemented by a base station 105 or its components as described herein. For example, the operations of method 1700 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1705, the base station may receive, from a neighboring cell, a backhaul message indicating whether the neighboring cell supports V2X communications. The operations of 1705 may be performed according to the methods described herein. In some examples, aspects of the operations of 1705 may be performed by a backhaul message receiver as described with reference to FIGs. 9 through 12.

At 1710, the base station may determine a set of one or more cells that support V2X communications and priority information for a set of V2X frequencies supported by the set of one or more cells. The operations of 1710 may be performed according to the methods described herein. In some examples, aspects of the operations of 1710 may be performed by a priority manager as described with reference to FIGs. 9 through 12.

At 1715, the base station may transmit, to a UE, control signaling that indicates the set of one or more cells that support V2X communications and the priority information for the set of V2X frequencies supported by the set of one or more cells. The operations of 1715 may be performed according to the methods described herein. In some examples, aspects of the operations of 1715 may be performed by a control signaling transmitter as described with reference to FIGs. 9 through 12.

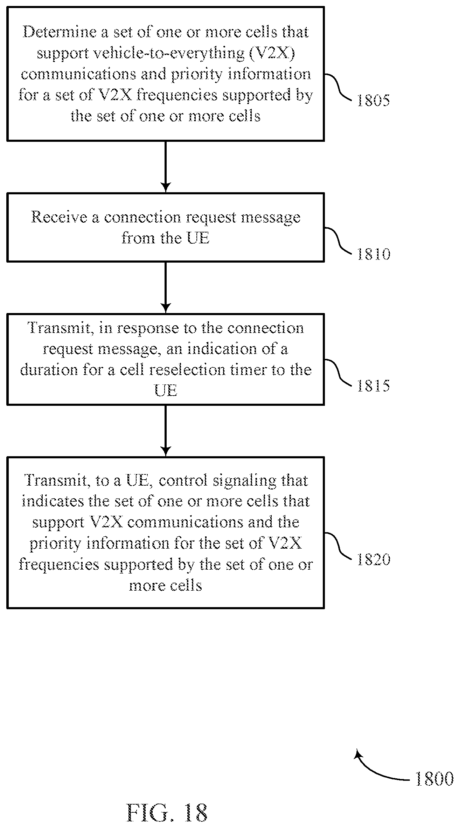

**FIG. 18** shows a flowchart illustrating a method 1800 that supports V2X cell reselection in accordance with aspects of the present disclosure. The operations of method 1800 may be implemented by a base station 105 or its components as described herein. For example, the operations of method 1800 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1805, the base station may determine a set of one or more cells that support V2X communications and priority information for a set of V2X frequencies supported by the set of one or more cells. The operations of 1805 may be performed according to the methods described herein. In some examples, aspects of the operations of 1805 may be performed by a priority manager as described with reference to FIGs. 9 through 12.

At 1810, the base station may receive a connection request message from the UE. The operations of 1810 may be performed according to the methods described herein. In some examples, aspects of the operations of 1810 may be performed by a connection request receiver as described with reference to FIGs. 9 through 12.

At 1815, the base station may transmit, in response to the connection request message, an indication of a duration for a cell reselection timer to the UE. The operations of 1815 may be performed according to the methods described herein. In some examples, aspects of the operations of 1815 may be performed by a reselection timer transmitter as described with reference to FIGs. 9 through 12.

At 1820, the base station may transmit, to a UE, control signaling that indicates the set of one or more cells that support V2X communications and the priority information for the set of V2X frequencies supported by the set of one or more cells. The operations of 1820 may be performed according to the methods described herein. In some examples, aspects of the operations of 1820 may be performed by a control signaling transmitter as described with reference to FIGs. 9 through 12.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein, but is to be accorded the broadest scope consistent with the claims.

## Claims

1. A method (1300) for wireless communications performed by a user equipment, UE, **characterized by** comprising:
receiving (1305), from a serving cell of the UE, control signaling that indicates a set of one or more cells that support vehicle-to-everything, V2X, communications and priority information for a set of V2X frequencies supported by the set of one or more cells;
measuring (1310) one or more parameters of a target cell of the set of one or more cells; and
performing (1315) a cell reselection procedure to establish connectivity with the target cell using a first V2X frequency of the set of V2X frequencies based on the priority information and the measured one or more parameters.

2. The method (1300) of claim 1, further comprising:
receiving an indication of a duration for a cell reselection timer from the serving cell;
initiating the cell reselection timer based on receiving the indication; and performing the cell reselection procedure with the target cell prior to expiration of the cell reselection timer, and wherein receiving the indication of the duration for the cell reselection timer preferably comprises:
receiving, from the serving cell, a connection release message that comprises the indication of the duration for the cell reselection timer.

3. The method (1300) of claim 1, further comprising:
determining that the measured one or more parameters of the target cell satisfy a measurement threshold, wherein the cell reselection procedure is performed based on the measured one or more parameters satisfying the measurement threshold.

4. The method (1300) of claim 1, wherein measuring the one or more parameters of the target cell of the set of one or more cells comprises:
measuring a reference signal received power, RSRP, a received signal strength indicator, RSSI, a received signal code power, RSCP, reference signal received quality, RSRQ, or any combination thereof associated with at least one cell of the set of one or more cells including the target cell.

5. The method (1300) of claim 1, wherein receiving the control signaling comprises:
receiving a radio resource control, RRC, connection release message comprising the set of one or more cells that support V2X communications and the priority information for the set of V2X frequencies supported by the set of one or more cells.

6. The method (1300) of claim 1, further comprising:
receiving a system information message from the target cell based on receiving the control signaling, the system information message indicating a V2X configuration of the target cell, wherein the cell reselection procedure is performed based on the V2X configuration, and wherein receiving the system information message preferably comprises:
receiving a system information block, SIB, within the system information message.

7. The method (1300) of claim 1, wherein the set of one or more cells comprises the serving cell and one or more neighboring cells.

8. The method (1300) of claim 1, wherein the serving cell and the target cell operate using different radio access technologies, RATs.

9. A method (1600) for wireless communications performed by a serving cell associated with a base station (105) , **characterized by** comprising:
determining (1605) a set of one or more cells that support vehicle-to-everything, V2X, communications and priority information for a set of V2X frequencies supported by the set of one or more cells; and
transmitting (1610), to a user equipment, UE, control signaling that indicates the set of one or more cells that support V2X communications and the priority information for the set of V2X frequencies supported by the set of one or more cells.

10. The method (1600) of claim 9, further comprising:
receiving, from a neighboring cell, a backhaul message indicating whether the neighboring cell supports V2X communications.

11. The method (1600) of claim 9, wherein transmitting the control signaling comprises:
transmitting a radio resource control, RRC, connection release message that indicates the set of one or more cells that support V2X communications and the priority information for the set of V₂X frequencies supported by the set of one or more cells.

12. The method (1600) of claim 9, further comprising:
receiving a connection request message from the UE; and
transmitting, in response to the connection request message, an indication of a duration for a cell reselection timer to the UE, and wherein transmitting the indication of the duration for the cell reselection timer preferably comprises:
transmitting a connection release message that comprises the indication of the duration for the cell reselection timer to the UE.

13. An apparatus for wireless communications by a user equipment, UE, **characterized by** comprising:
means for receiving, from a serving cell of the UE, control signaling that indicates a set of one or more cells that support vehicle-to-everything, V2X, communications and priority information for a set of V₂X frequencies supported by the set of one or more cells;
means for measuring one or more parameters of a target cell of the set of one or more cells; and
means for performing a cell reselection procedure to establish connectivity with the target cell using a first V₂X frequency of the set of V₂X frequencies based on the priority information and the measured one or more parameters.

14. An apparatus for wireless communications by a serving cell associated with a base station (105), **characterized by** comprising:
means for determining a set of one or more cells that support vehicle-to-everything, V2X, communications and priority information for a set of V2X frequencies supported by the set of one or more cells; and
means for transmitting, to a user equipment, UE, control signaling that indicates the set of one or more cells that support V2X communications and the priority information for the set of V₂X frequencies supported by the set of one or more cells.

15. A computer program comprising instructions which, when executed by a computer, cause the computer to perform the steps of one of the methods of one of the claims 1-8 or 9-12.

## Patentansprüche

1. Ein Verfahren (1300) für drahtlose Kommunikationen, das von einem Benutzergerät, UE, durchgeführt wird, **dadurch gekennzeichnet, dass** es umfasst:
Empfangen (1305), von einer bedienenden Zelle des UE, von Steuersignalisierung, die einen Satz von einer oder mehreren Zellen, die Fahrzeug-zu-Alles-, V2X-, Kommunikationen unterstützen, und Prioritätsinformation für einen Satz von V2X-Frequenzen, die von dem Satz von einer oder mehreren Zellen unterstützt werden, anzeigt;
Messen (1310) eines oder mehrerer Parameter einer Zielzelle des Satzes von einer oder mehreren Zellen; und
Durchführen (1315) einer Zellenneuauswahlprozedur, um eine Konnektivität mit der Zielzelle unter Verwendung einer ersten V2X-Frequenz des Satzes von V2X-Frequenzen basierend auf der Prioritätsinformation und dem gemessenen einen oder den gemessenen mehreren Parametern herzustellen.

2. Das Verfahren (1300) nach Anspruch 1, ferner umfassend:
Empfangen einer Anzeige einer Dauer für einen Zellenneuauswahlzeitgeber von der bedienenden Zelle;
Initiieren des Zellenneuauswahlzeitgebers basierend auf Empfangen der Anzeige; und Durchführen der Zellenneuauswahlprozedur mit der Zielzelle vor Ablauf des Zellenneuauswahlzeitgebers, und wobei Empfangen der Anzeige der Dauer für den Zellenneuauswahlzeitgeber vorzugsweise umfasst:
Empfangen, von der bedienenden Zelle, einer Verbindungsfreigabenachricht, die die Anzeige der Dauer für den Zellenneuauswahlzeitgeber umfasst.

3. Das Verfahren (1300) nach Anspruch 1, ferner umfassend:
Bestimmen, dass der gemessene eine oder die gemessenen mehreren Parameter der Zielzelle einen Messschwellenwert erfüllen, wobei die Zellenneuauswahlprozedur basierend auf dem gemessenen einen oder den gemessenen mehreren Parametern durchgeführt wird, die den Messschwellenwert erfüllen.

4. Das Verfahren (1300) nach Anspruch 1, wobei Messen des einen oder der mehreren Parameter der Zielzelle des Satzes von einer oder mehreren Zellen umfasst:
Messen einer Referenzsignalempfangsleistung, RSRP, eines Empfangssignalstärkeindikators, RSSI, einer Empfangssignalcodeleistung, RSCP, einer Referenzsignalempfangsqualität, RSRQ, oder einer beliebigen Kombination davon, die mit mindestens einer Zelle des Satzes von einer oder mehreren Zellen einschließlich der Zielzelle assoziiert ist.

5. Das Verfahren (1300) nach Anspruch 1, wobei Empfangen der Steuersignalisierung umfasst:
Empfangen einer Funkressourcensteuerungs-, RRC-, Verbindungsfreigabenachricht, die den Satz von einer oder mehreren Zellen, die V2X-Kommunikationen unterstützen, und die Prioritätsinformation für den Satz von V2X-Frequenzen, die von dem Satz von einer oder mehreren Zellen unterstützt werden, umfasst.

6. Das Verfahren (1300) nach Anspruch 1, ferner umfassend:
Empfangen einer Systeminformationsnachricht von der Zielzelle basierend auf Empfangen der Steuersignalisierung, wobei die Systeminformationsnachricht eine V2X-Konfiguration der Zielzelle anzeigt, wobei die Zellenneuauswahlprozedur basierend auf der V2X-Konfiguration durchgeführt wird, und wobei Empfangen der Systeminformationsnachricht vorzugsweise umfasst:
Empfangen eines Systeminformationsblocks, SIB, innerhalb der Systeminformationsnachricht.

7. Das Verfahren (1300) nach Anspruch 1, wobei der Satz von einer oder mehreren Zellen die bedienende Zelle und eine oder mehrere benachbarte Zellen umfasst.

8. Das Verfahren (1300) nach Anspruch 1, wobei die bedienende Zelle und die Zielzelle unter Verwendung unterschiedlicher Funkzugangstechnologien, RATs, arbeiten.

9. Ein Verfahren (1600) für drahtlose Kommunikationen, das von einer bedienenden Zelle durchgeführt wird, die mit einer Basisstation (105) assoziiert ist, **dadurch gekennzeichnet, dass** es umfasst:
Bestimmen (1605) eines Satzes von einer oder mehreren Zellen, die Fahrzeug-zu-Alles-, V2X-, Kommunikationen unterstützen, und Prioritätsinformation für einen Satz von V2X-Frequenzen, die von dem Satz von einer oder mehreren Zellen unterstützt werden; und
Übertragen (1610), an ein Benutzergerät, UE, einer Steuersignalisierung, die den Satz von einer oder mehreren Zellen, die V2X-Kommunikationen unterstützen, und die Prioritätsinformation für den Satz von V2X-Frequenzen, die von dem Satz von einer oder mehreren Zellen unterstützt werden, anzeigt.

10. Das Verfahren (1600) nach Anspruch 9, ferner umfassend:
Empfangen, von einer benachbarten Zelle, einer Backhaul-Nachricht, die anzeigt, ob die benachbarte Zelle V2X-Kommunikationen unterstützt.

11. Das Verfahren (1600) nach Anspruch 9, wobei Übertragen der Steuersignalisierung umfasst:
Übertragen einer Funkressourcensteuerungs-, RRC-, Verbindungsfreigabenachricht, die den Satz von einer oder mehreren Zellen, die V2X-Kommunikationen unterstützen, und die Prioritätsinformation für den Satz von V2X-Frequenzen, die von dem Satz von einer oder mehreren Zellen unterstützt werden, anzeigt.

12. Das Verfahren (1600) nach Anspruch 9, ferner umfassend:
Empfangen einer Verbindungsanforderungsnachricht von dem UE; und
Übertragen, als Reaktion auf die Verbindungsanforderungsnachricht, einer Anzeige einer Dauer für einen Zellenneuauswahlzeitgeber an das UE, und wobei Übertragen der Anzeige der Dauer für den Zellenneuauswahlzeitgeber vorzugsweise umfasst:
Übertragen einer Verbindungsfreigabenachricht, die die Anzeige der Dauer für den Zellenneuauswahlzeitgeber umfasst, an das UE.

13. Eine Vorrichtung für drahtlose Kommunikationen durch ein Benutzergerät, UE, **dadurch gekennzeichnet, dass** sie umfasst:
Mittel zum Empfangen, von einer bedienenden Zelle des UE, von Steuersignalisierung, die einen Satz von einer oder mehreren Zellen, die Fahrzeug-zu-Alles-, V2X-, Kommunikationen unterstützen, und Prioritätsinformation für einen Satz von V2X-Frequenzen, die von dem Satz von einer oder mehreren Zellen unterstützt werden, anzeigt;
Mittel zum Messen eines oder mehrerer Parameter einer Zielzelle des Satzes von einer oder mehreren Zellen; und
Mittel zum Durchführen einer Zellenneuauswahlprozedur, um eine Konnektivität mit der Zielzelle unter Verwendung einer ersten V2X-Frequenz des Satzes von V2X-Frequenzen basierend auf der Prioritätsinformation und dem gemessenen einen oder den gemessenen mehreren Parametern herzustellen.

14. Eine Vorrichtung für drahtlose Kommunikationen durch eine bedienende Zelle, die mit einer Basisstation (105) assoziiert ist, **dadurch gekennzeichnet, dass** sie umfasst:
Mittel zum Bestimmen eines Satzes von einer oder mehreren Zellen, die Fahrzeug-zu-Alles-, V2X-, Kommunikationen unterstützen, und Prioritätsinformation für einen Satz von V2X-Frequenzen, die von dem Satz von einer oder mehreren Zellen unterstützt werden; und
Mittel zum Übertragen, an ein Benutzergerät, UE, von Steuersignalisierung, die den Satz von einer oder mehreren Zellen, die V2X-Kommunikationen unterstützen, und die Prioritätsinformation für den Satz von V2X-Frequenzen, die von dem Satz von einer oder mehreren Zellen unterstützt werden, anzeigt.

15. Ein Computerprogramm, umfassend Anweisungen, die, wenn sie von einem Computer ausgeführt werden, den Computer veranlassen, die Schritte eines der Verfahren nach einem der Ansprüche 1-8 oder 9-12 durchzuführen.

## Revendications

1. Un procédé (1300) de communication sans fil réalisé par un équipement utilisateur, UE, **caractérisé en ce qu'**il comprend :
la réception (1305), à partir d'une cellule de desserte de l'UE, d'une signalisation de contrôle qui indique un ensemble d'une ou plusieurs cellules qui prennent en charge des communications véhicule-à-tout, V2X, et d'informations de priorité pour un ensemble de fréquences V2X prises en charge par l'ensemble d'une ou plusieurs cellules ;
la mesure (1310) d'un ou plusieurs paramètres d'une cellule cible de l'ensemble d'une ou plusieurs cellules ; et
la réalisation (1315) d'une procédure de resélection de cellule pour établir une connectivité avec la cellule cible en utilisant une première fréquence V2X de l'ensemble de fréquences V2X sur la base des informations de priorité et des un ou plusieurs paramètres mesurés.

2. Le procédé (1300) selon la revendication 1, comprenant en outre :
la réception d'une indication d'une durée pour une temporisation de resélection de cellule de la cellule de desserte ;
l'initiation de la temporisation de resélection de cellule sur la base de la réception de l'indication ; et
la réalisation de la procédure de resélection de cellule avec la cellule cible avant l'expiration de la temporisation de resélection de cellule, et dans lequel la réception de l'indication de la durée pour la temporisation de resélection de cellule comprend de préférence :
la réception, à partir de la cellule de desserte, d'un message de libération de connexion qui comprend l'indication de la durée pour la temporisation de resélection de cellule.

3. Le procédé (1300) selon la revendication 1, comprenant en outre :
la détermination que les un ou plusieurs paramètres mesurés de la cellule cible satisfont à un seuil de mesure, dans lequel la procédure de resélection de cellule est effectuée sur la base des un ou plusieurs paramètres mesurés satisfaisant au seuil de mesure.

4. Le procédé (1300) selon la revendication 1, dans lequel la mesure des un ou plusieurs paramètres de la cellule cible de l'ensemble d'une ou plusieurs cellules comprend :
la mesure d'une puissance reçue de signal de référence, RSRP, d'un indicateur d'intensité de signal reçu, RSSI, d'une puissance de code de signal reçu, RSCP, d'une qualité reçue de signal de référence, RSRQ, ou toute combinaison de ceux-ci associée à au moins une cellule de l'ensemble d'une ou plusieurs cellules incluant la cellule cible.

5. Le procédé (1300) selon la revendication 1, dans lequel la réception de la signalisation de contrôle comprend : la réception d'un message de libération de connexion de contrôle de ressource radio, RRC, comprenant l'ensemble d'une ou plusieurs cellules qui prennent en charge des communications V2X et les informations de priorité pour l'ensemble de fréquences V2X prises en charge par l'ensemble d'une ou plusieurs cellules.

6. Le procédé (1300) selon la revendication 1, comprenant en outre :
la réception d'un message d'informations système à partir de la cellule cible sur la base de la réception de la signalisation de contrôle, le message d'informations système indiquant une configuration V2X de la cellule cible, dans lequel la procédure de resélection de cellule est réalisée sur la base de la configuration V2X, et dans lequel la réception du message d'informations système comprend de préférence :
la réception d'un bloc d'informations système, SIB, dans le message d'informations système.

7. Le procédé (1300) selon la revendication 1, dans lequel l'ensemble d'une ou plusieurs cellules comprend la cellule de desserte et une ou plusieurs cellules voisines.

8. Le procédé (1300) selon la revendication 1, dans lequel la cellule de desserte et la cellule cible fonctionnent en utilisant des technologies d'accès radio, RAT, différentes.

9. Un procédé (1600) de communication sans fil, réalisé par une cellule de desserte associée à une station de base (105), **caractérisé en ce qu'**il comprend :
la détermination (1605) d'un ensemble d'une ou plusieurs cellules qui prennent en charge des communications véhicule-à-tout, V2X, et d'informations de priorité pour un ensemble de fréquences V2X prises en charge par l'ensemble d'une ou plusieurs cellules ; et
la transmission (1610), à un équipement utilisateur, UE, d'une signalisation de contrôle qui indique l'ensemble d'une ou plusieurs cellules qui prennent en charge des communications V2X et des informations de priorité pour l'ensemble de fréquences V2X prises en charge par l'ensemble d'une ou plusieurs cellules.

10. Le procédé (1600) selon la revendication 9, comprenant en outre :
la réception, à partir d'une cellule voisine, d'un message de backhaul indiquant si la cellule voisine prend en charge des communications V2X.

11. Le procédé (1600) selon la revendication 9, dans lequel la transmission de la signalisation de contrôle comprend :
la transmission d'un message de libération de connexion de contrôle de ressource radio, RRC, qui indique l'ensemble d'une ou plusieurs cellules qui prennent en charge des communications V2X et les informations de priorité pour l'ensemble de fréquences V2X prises en charge par l'ensemble d'une ou plusieurs cellules.

12. Le procédé (1600) selon la revendication 9, comprenant en outre :
la réception d'un message de requête de connexion à partir de l'UE ; et
la transmission, en réponse au message de requête de connexion, d'une indication d'une durée pour une temporisation de resélection de cellule à l'UE, et dans lequel la transmission de l'indication de la durée pour la temporisation de resélection de cellule comprend de préférence :
la transmission à l'UE d'un message de libération de connexion qui comprend l'indication de la durée pour la temporisation de resélection de cellule.

13. Un appareil pour la communication sans fil par un équipement utilisateur, UE, **caractérisé en ce qu'**il comprend :
un moyen pour recevoir, à partir d'une cellule de desserte de l'UE, une signalisation de contrôle qui indique un ensemble d'une ou plusieurs cellules qui prennent en charge des communications véhicule-à-tout, V2X, et des informations de priorité pour un ensemble de fréquences V2X prises en charge par l'ensemble d'une ou plusieurs cellules ;
un moyen pour mesurer un ou plusieurs paramètres d'une cellule cible de l'ensemble d'une ou plusieurs cellules ; et
un moyen pour réaliser une procédure de resélection de cellule pour établir une connectivité avec la cellule cible en utilisant une première fréquence V2X de l'ensemble de fréquences V2X sur la base des informations de priorité et des un ou plusieurs paramètres mesurés.

14. Un appareil pour la communication sans fil par une cellule de desserte associée à une station de base (105), **caractérisé en ce qu'**il comprend :
un moyen pour déterminer un ensemble d'une ou plusieurs cellules qui prennent en charge des communications véhicule-à-tout, V2X, et des informations de priorité pour un ensemble de fréquences V2X prises en charge par l'ensemble d'une ou plusieurs cellules ; et
un moyen pour transmettre, à un équipement utilisateur, UE, une signalisation de contrôle qui indique l'ensemble d'une ou plusieurs cellules qui prennent en charge des communications V2X et les informations de priorité pour l'ensemble de fréquences V2X prises en charge par l'ensemble d'une ou plusieurs cellules.

15. Un programme de calculateur comprenant des instructions qui, lorsqu'elles sont exécutées par un calculateur, amènent le calculateur à réaliser les étapes d'un des procédés selon une des revendications 1 à 8 ou 9 à 12.
